# EUROPÄISCHE PATENTSCHRIFT

(11) **EP 0 918 613 B1**
(45) Veröffentlichungstag und Bekanntmachung des Hinweises auf die Patenterteilung: **12.09.2001**
(21) Anmeldenummer: 97930464.9
(22) Anmeldetag: 01.07.1997
(51) Int. Cl.: B29C 47/02

(54) **VERFAHREN ZUM AUFBRINGEN EINES STRANGFÖRMIGEN KUNSTSTOFFPROFILS LÄNGS DES RANDES EINER GLASSCHEIBE**
METHOD OF APPLYING A CORD-LIKE PLASTICS PROFILED MEMBER ALONG THE EDGE OF A PANE OF GLASS
PROCEDE POUR APPLIQUER UN BOUDIN PLASTIQUE PROFILE LE LONG DU BORD D'UNE VITRE

(30) Priorität: 05.07.1996 DE 19627053
(43) Veröffentlichungstag der Anmeldung: 02.06.1999
(73) Patentinhaber: Pilkington Automotive Deutschland GmbH, 58455 Witten (DE)
(72) Erfinder: BÖGE, Werner, D-46537 Dinslaken (DE)
(74) Vertreter: Niemann, Uwe, Dr.-Ing.
(86) Internationale Anmeldenummer: EP9703426
(87) Internationale Veröffentlichungsnummer: WO9801283

(56) Entgegenhaltungen:
- EP-A- 0 634 263
- EP-A- 0 712 711
- EP-A- 0 748 683
- DE-A- 2 447 036
- US-A- 5 446 998
- PATENT ABSTRACTS OF JAPAN vol. 097, no. 001, 31.Januar 1997 & JP 08 244091 A (ASAHI GLASS CO LTD), 24.September 1996,

## Beschreibung

Die Erfindung betrifft ein Verfahren zum Aufbringen eines strangförmigen Kunststoffprofils längs des Randes einer (Kfz-) Glasscheibe, bei dem der Querschnitt des Kunststoffprofils nach dessen Aufbringen zumindest abschnittsweise bleibend verformt wird.

Die Erfindung bezieht sich insbesondere auf das Aufbringen eines Kunststoffprofils mittels einer längs des Randes bewegten Extrusionsdüse mit einer profilierten Düsenöffnung, wobei der Querschnitt des Kunststoffprofils wenigstens eine freitragende Lippe aufweist.

Bei einem bekannten Verfahren (DE 41 23 588) wird die an einem Roboterarm gehaltene Extrusionsdüse längs des Randes der Glasscheibe geführt und dabei das extrudierte strangförmige Kunststoffprofil am Rand der Glasscheibe verlegt. Das Kunststoffmaterial kann ein extrudierfähiges Reaktionssystem, zum Beispiel ein Polyurethansystem sein, das unter Zwischenschaltung eines Haftvermittlers längs des Randes der Glasscheibe abgelegt wird. Materialien aus der Gruppe der Thermoplaste oder thermoplastischen Elastomere kommen ebenfalls zum Einsatz.

Bei einem anderen bekannten Verfahren wird ein strangförmiges Kunststoffprofil dadurch auf den Rand von Glasscheiben aufgebracht, daß an den Scheibenrand mittels einer Form ein Kunststoffmaterial angeformt, insbesondere angespritzt wird, das in der geschlossenen Form zumindest teilweise aushärtet (EP 76 924). Dabei kann das Kunststoffmaterial während des Aufbringens auch noch mechanisch verformt werden (EP 0634 263). Auch hierbei kommen vor allem thermoplastische oder reagierend aushärtende Materialien zum Einsatz.

Es ist bekannt, Kunststoffprofile für Kfz-Glasscheiben mit einer freitragenden Lippe zu versehen, die verschiedene Funktionen erfüllen kann (DE 33 23 006, DE 38 18 930). Die freitragende Lippe des Kunststoffprofils erstreckt sich beispielsweise entlang des gesamten Scheibenumfangs im wesentlichen parallel zur Scheibenebene und über den Scheibenrand hinaus, so daß die Lippe bei in eine zugeordnete Öffnung der Karosserie eingesetzter Kfz-Glasscheibe an einer Wandung der Öffnung anliegt.

Es gibt aber Einbausituationen, bei denen die Öffnung der Karosserie keine vollständig umlaufende Wandung für die Anlage der Lippe aufweist oder bei denen aus anderen Gründen kein umlaufend gleichförmiger Profilquerschnitt gewünscht wird. Beispielsweise kann im unteren Bereich einer Kfz-Heckscheibe diese Wandung unterbrochen sein oder fehlen, so daß dann bei geöffneter Kofferraumklappe ein Spalt zwischen Lippe, Glasscheibe und Karosserieteil sichtbar ist. Damit zur Abdeckung dieses Spalts die Lippe in diesem Bereich eine andere räumliche Lage einnehmen kann, muß zur Aufbringung des Kunststoffprofils mittels Profilextrusion für diesen Bereich des Scheibenrandes eine andere Extrusionsdüse als im restlichen Randbereich eingesetzt werden. Das ist aufwendig und führt zu sichtbaren Stoßbereichen zwischen den verschiedenen Profilabschnitten. Zwar gibt es bereits Extrusionsdüsen mit veränderlichen Düsenquerschnitten (DE U 93 12 831), diese sind jedoch konstruktiv und steuerungstechnisch aufwendig.

Zwar ist bereits ein Verfahren der eingangs beschriebenen Gattung bekannt, bei dem ein extrudiertes Kunststoffprofil nach dessen Aufbringen mittels eines komplexen Nachformwerkzeugs mechanisch bleibend verformt wird (DE 44 21 299). Der Nachteil dieses Verfahrens besteht jedoch darin, daß das Nachformwerkzeug das noch verformbare und in der Regel eine klebrige Oberfläche aufweisende Kunststoffprofil zur Erzielung der Verformung berühren muß. Hierbei kann nicht sicher ausgeschlossen werden, daß Teile des Profils am Werkzeug haften bleiben und beim Abheben oder Verschieben des Werkzeugs ausreißen.

Bekannt ist es ferner, die Enden eines auf den Rand einer Kfz-Glasscheibe aufgebrachten Klebstoff-Profilstrangs mit einem harten Druckluftstrahl paßgenau zuzuschneiden und die zugeschnittenen Enden mit einem weichen Druckluftstrahl gegeneinander sowie gegen die Glasscheibe zu drücken (DE 40 22 484).

Aufgabe der Erfindung ist es, ein Verfahren anzugeben, mit dem es möglich ist, den Querschnitt des Kunststoffprofils nach dessen Aufbringen auf den Scheibenrand auf einfache Weise bleibend zu verformen, ohne daß die Gefahr eines Anhaftens des Profils am Nachformwerkzeug besteht. Das Verfahren soll es insbesondere ermöglichen, die räumliche Lage von freitragenden Lippen nachträglich zu verändern.

Diese Aufgabe wird dadurch gelöst, daß die Verformung mit Hilfe eines gasförmigen oder flüssigen Mediums erfolgt, bevor das Kunststoffmaterial vollständig ausgehärtet ist.

Als Medium kommt bevorzugt ein Druckgas zur Anwendung. Der Vorteil bei der Verwendung gasförmiger Medien besteht darin, daß im Regelfall eine nachträgliche Reinigung der mit dem Kunststoffprofil versehenen Glasscheibe nicht erforderlich ist. Im Rahmen der Erfindung einsetzbare Gase oder Flüssigkeiten sind so auszuwählen, daß unerwünschte Reaktionen mit dem Kunststoffmaterial vermieden werden. Als gasförmiges Medium wird man vor allem Luft einsetzen. Als flüssige Medien kommen vor allem Flüssigkeiten auf Wasserbasis, aber auch verflüssigte Gase, in Frage.

Die Erfindung befaßt sich mit einer nachträglichen Profilverformung ohne nennenswerten Materialabtrag. Man wird daher im Normalfall darauf zu achten haben, daß die auf das zu verformende Profil über das verwendete Medium einwirkenden Kräfte nicht zu groß werden. Nichtsdestoweniger kann es im Einzelfall sinnvoll sein, dem gasförmigen oder flüssigen Medium feste Partikel beizumischen, z.B. zur Erzeugung einer mattierten Oberfläche im nachverformten Bereich.

Es liegt im Rahmen der Erfindung, mit einem erwärmten oder gekühlten Medium zu arbeiten, um je nach Anforderung und verwendetem Kunststoffmaterial die Aushärtung des Kunststoffmaterials zu beschleunigen, zu verlangsamen oder gar für den Nachverformungsprozeß zumindest teilweise rückgängig zu machen. Eine andere Möglichkeit besteht darin, dem Medium ein Mittel zur Beschleunigung oder zur Verlangsamung der Aushärtung von reagierenden Materialien beizumischen. So kann es bei feuchtigkeitshärtenden Materialien, z.B. feuchtigkeitshärtendem Polyurethan, vorteilhaft sein, mit angefeuchteter Druckluft oder Wasserdampf zu arbeiten, um zumindest die Oberfläche des Kunststoffprofils beschleunigt aushärten zu lassen und so die durch die Beaufschlagung mit Druckluft erzeugte Nachverformung zu stabilisieren.

Auch wenn es möglich ist, die Verformung des Kunststoffprofils unter Ausnutzung seiner Materialeigenschaften in einem ruhenden Medium vorzunehmen, erfolgt vorzugsweise die Verformung mit Hilfe eines strömenden Mediums. Eine gezielte Nachverformung ist dann besonders gut möglich, wenn das Medium als mindestens ein Strahl, insbesondere als Druckgasstrahl, auf das Kunststoffprofil gerichtet wird. Dieses Verfahren hat sich vor allem dann bewährt, wenn die Ausrichtung der Lippe eines Kunststoffprofils nach dessen Extrusion auf den Scheibenrand verformt werden soll. Hierzu wird bei noch nicht völlig ausgehärtetem Kunsttoffmaterial zumindest abschnittsweise wenigstens ein Druckgasstrahl auf die Lippe gerichtet und dadurch die Ausrichtung Lage der Lippe verändert. Zweckmäßigerweise wird dazu eine Druckgasdüse eingesetzt, die der Extrusionsdüse nachgeführt wird. Am einfachsten ist es, wenn die Druckgasdüse am gleichen Roboterarm angeordnet ist wie die Extrusionsdüse. Die Druckgasdüse kann aber auch an einem gesonderten Roboterarm angeordnet sein. Ein gegebenenfalls nur abschnittsweiser Einsatz der Druckgasdüse läßt sich ohne weiteres verwirklichen. Es versteht sich, daß die Erfindung auch in den Fällen anwendbar ist, bei denen andere Mittel als Roboter zur Manipulation der Extrusionsdüse und/oder des die nachträgliche Verformung des Kunststoffprofils bewirkenden Werkzeugs eingesetzt werden. Die Erfindung ist außerdem auch anwendbar in Fällen, bei denen die Glasscheibe mit dem Kunststoffprofil bewegt wird und die Extrusionsdüse und/oder das Nachverformungswerkzeug im wesentlichen stationär angebracht sind.

Mit dem Strahldruck des Druckgasstrahls kann die räumliche Lage der Lippe, gegebenenfalls auch ihr Querschnitt verändert werden, solange das Material des extrudierten Kunststoffstrangs noch nicht vollständig ausgehärtet und damit noch bleibend verformbar ist. Aushärtung meint in diesem Zusammenhang sowohl das Verfestigen eines reagierenden Systems durch Vernetzung als auch das Erstarren eines thermoplastischen (Elastomer-) Systems beim Abkühlen. Die zur Erzielung des gewünschten Ergebnisses erforderlichen Parameter lassen sich durch einfache Versuche ermitteln. Das gilt insbesondere für den Abstand zwischen Lippe und Druckgasdüse, den Winkel, unter dem der Druckgasstrahl auf die Lippe gerichtet ist, den Abstand zwischen der Extrusionsdüse und der Druckgasdüse, der Form der Druckgasdüse und weitere Parameter. Es hat sich in der Praxis als ausreichend erwiesen, wenn der Druckgasstrahl mit einem Überdruck von 1 bis 2 bar aus der Druckgasdüse austritt.

Die Druckgasdüse kann beispielsweise einen kreisförmigen Austrittsquerschnitt aufweisen oder als Schlitzdüse ausgebildet sein. In jedem Fall sollte der Durchmesser des Druckgasstrahls nicht größer sein als die Spannweite der Lippe, so daß auch dann, wenn der Druckgasstrahl unter einem Winkel ungleich 90°, also streifend, auf die Lippe gerichtet wird, eine gezielte Verformung der Lippe möglich ist.

Als besonderer Vorteil des erfindungsgemäßen Verfahrens hat sich erweisen, daß mit geringem apparativem Aufwand ein praktisch nahtloser Übergang zwischen Profilbereichen mit unterschiedlichem Querschnitt erzeugt werden kann, ohne daß sich die Taktzeit gegenüber Extrusionsverfahren für Profile mit konstantem Querschnitt erhöhen würde. Aber auch bei anderen Aufbringverfahren für strangförmige Kunststoffprofile kann es vorteilhaft sein, bereichsweise eine Nachverformung vorzunehmen. Beispielsweise können Profile mit zumindest abschnittsweise unterschiedlichen Querschnitten mit derselben Spritzgußform hergestellt werden, wodurch Formenkosten gespart werden können. Auch kann es vorteilhaft sein, Hinterschneidungen oder dergleichen erst nach dem Entformen in das Kunststoffprofil einzubringen, um das Entformen zu erleichtern. Die Erfindung nutzt aus, daß mittels Spritzguß hergestellte Kunststoffprofile meist beim Entformen noch nicht vollständig ausgehärtet sind und noch einige Zeit danach mit dem erfindungsgemäßen Verfahren nachverformbar sind.

Anstelle von Druckgasdüsen mit nur einer zweidimensionalen Austrittsöffnung kann auch mit komplexeren Mehrfachdüsen-Anordnungen und Düsen mit an die Endform der Lippe angepaßten Düsenköpfen gearbeitet werden, wenn vor allem bei Lippen großer Breite besondere Lippenformen erzielt werden sollen.

Eine weitere Ausführungsform der Erfindung ist dadurch gekennzeichnet, daß auf jede Seite der Lippe zumindest ein Druckgasstrahl gerichtet wird. Auf diese Weise lassen sich auch kompliziertere, zum Beispiel bogen- oder wellenförmige Lippenquerschnitte erzeugen.

Da die Verformbarkeit des Kunststoffmaterials unmittelbar nach dessen Extrusion im Normalfall am größten ist, arbeitet man im Rahmen der Erfindung bevorzugt mit einem Werkzeug, das das die Nachverformung bewirkende Medium auf das Profil richtet und das parallel zur Längserstreckung des Kunststoffprofils geführt (verschoben) wird, und zwar nach Möglichkeit unmittelbar im Anschluß an die Extrusionsdüse. Hierbei wird man im Regelfall ein Werkzeug verwenden, das einen Strahl des verformenden Mediums mit im Vergleich zu den Profilabmessungen, insbesondere der Spannweite einer freitragenden Lippe, kleinem Durchmesser erzeugt. Es liegt jedoch im Rahmen der Erfindung, mit einem langgestreckten Werkzeug, z.B. einer Schlitzdüse, zu arbeiten, das parallel zum nachzuverformenden Profilabschnitt angeordnet wird und mit dessen Hilfe der gesamte Abschnitt praktisch gleichzeitig in die angestrebte Endform gebracht wird. Stets wird im Rahmen der Erfindung darauf zu achten sein, daß die Werkzeuge, mit denen das die nachverformende Medium auf das Kunststoffprofil gerichtet wird, dieses nicht unmittelbar berühren, um ungewollte Beeinträchtigungen der Profiloberfläche zu vermeiden.

Zwar besteht die Hauptanwendung der Erfindung in der nachträglichen Änderung der räumlichen Lage der freitragenden Lippe eines Kunststoffprofils. Eine andere Anwendung kann aber beispielsweise in der nachträglichen abschnittsweisen Änderung der Ausrichtung eines üblicherweise einen im wesentlichen dreieckigen Querschnitt aufweisenden strangförmigen Profils aus einem Einbaukleber, z.B. aus feuchtigkeitshärtendem Polyurethan, für die Fahrzeugverglasung liegen. Solche Profile werden meist so auf den Scheibenrand aufgebracht, daß ihre Mittelachse im wesentlichen senkrecht zur Glasebene verläuft. Je nach Einbausituation kann es aber vorteilhaft sein, diese Ausrichtung lokal zu verändern, das Profil also um einige Grad zu kippen. Das erfindungsgemäße Verfahren erlaubt es auch, mittels eines beliebigen Verfahrens aufgebrachte Kunststoffprofile vor deren vollständiger Aushärtung abschnittsweise ohne nennenswerten Materialabtrag mit kanalartigen Vertiefungen zu versehen, z.B. für Drainagezwecke, als Verankerungshinterschneidungen oder dergleichen mehr.

Im folgenden werden in der Zeichnung dargestellte Ausführungsbeispiele der Erfindung erläutert; es zeigen:
- Figur 1: schematisch einen Schnitt durch ein auf eine Kfz-Glasscheibe extrudiertes strangförmiges Kunststoffprofil, das gemäß der Erfindung mittels eines Druckluftstrahls nachverformt wird,
- Figur 2: eine andere Ausführung des Gegenstandes nach Figur 1,
- Figur 3: die Kfz-Glasscheibe nach Figur 2 nach Verformung der Lippe,
- Figur 4: eine andere Ausführung des Gegenstandes nach Figur 1.

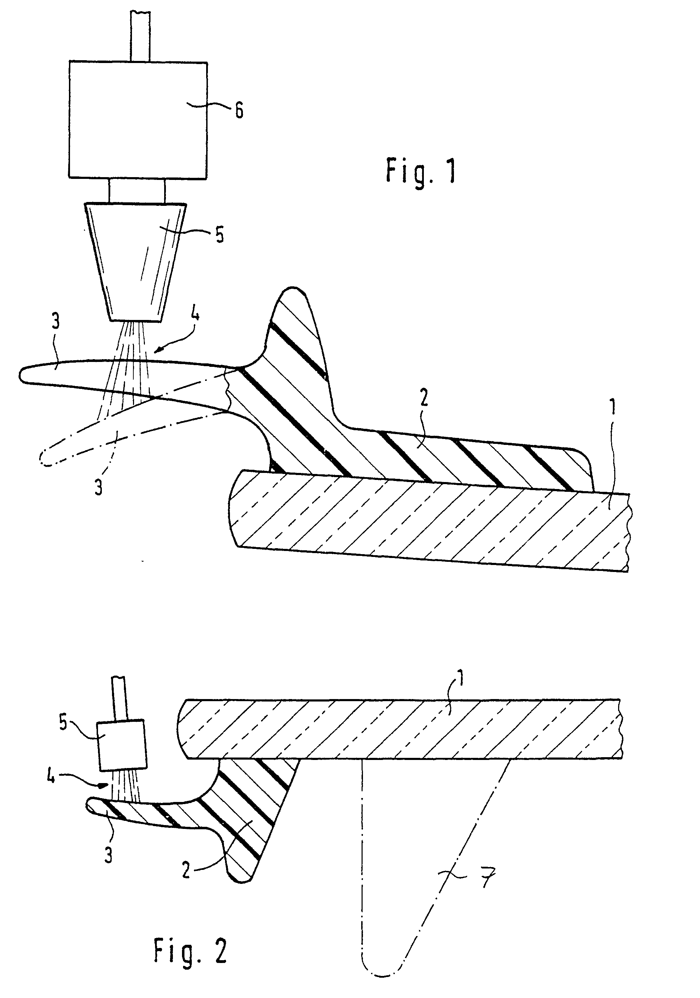

In Figur 1 ist der Rand einer Kfz-Glasscheibe wiedergegeben, auf den in an sich bekannter Weise ein strangförmiges Kunststoffprofil 2 durch Extrusion aus einer längs des Randes bewegten, nicht dargestellten Extrusionsdüse aufgetragen ist. Das Kunststoffprofil 2 kann aus einem extrudierfähigen Reaktionssystem, zum Beispiel auf Polyurethanbasis, bestehen. Es kann aber auch aus einem thermoplastischen Material, insbesondere einem thermoplastischen Elastomer, hergestellt sein. Eine zwischen dem Kunststoffprofil 2 und der Oberfläche der Kfz-Glasscheibe 1 aufgetragener Haftvermittlerschicht ist ebenso wie ein gegebenenfalls auf dem Scheibenrand vorhandener Email-Dekorstreifen nicht dargestellt.

Das noch nicht vollständig ausgehärtete Kunststoffprofil 2 weist eine freitragende Lippe 3 auf, die sich bei der dargestellten Ausführung im wesentlichen parallel zur Scheibenebene und über den Rand der Kfz-Glasscheibe 1 hinaus erstreckt. Zur Veränderung der räumlichen Lage dieser Lippe 3 wird auf eine Seite, bei der in Figur 1 wiedergegebenen Ausführung auf die Oberseite der Lippe 3, ein Druckluftstrahl 4 gerichtet, der aus einer Druckluftdüse 5 austritt, die am gleichen Roboterarm angeordnet ist wie eine nicht dargestellte Extrusionsdüse für den Kunststoffstrang 2 und die dementsprechend der Extrusionsdüse nachgeführt wird. Die Druckluftdüse 5 ist an eine nicht dargestellte Druckluftversorgung angeschlossen, von der die Druckluft über ein Steuer- oder Regelgerät 6 mit zugeordnetem Ventil zur Druckluftdüse 5 gelangt. Nicht dargestellt ist, daß der Abstand der Druckluftdüse 5 zur Lippe 3 und auch die Winkelstellung der Druckluftdüse 2 relativ zur Lippe 3 veränderbar sind.

Die Druckluftdüse 5 kann beispielsweise einen kreisförmigen Austrittsquerschnitt aufweisen oder als Schlitzdüse ausgebildet sein, wobei die Anordnung vorzugsweise so gewählt werden sollte, daß der Durchmesser des Druckluftstrahls 4 nicht größer ist als die Spannweite der Lippe 3.

Die Druckluftdüse 5 ist in einem derartigen Abstand hinter der Extrusionsdüse am Roboterarm befestigt, daß der aus der Druckluftdüse 5 austretende Druckluftstrahl 4 auf das noch plastisch verformbare Kunststoffmaterial der Lippe 3 trifft. Unter der Wirkung dieses Druckluftstrahls 4 verändert sich die Ausrichtung der Lippe 3, wie das in Figur 1 mit gestrichelten Linien wiedergegeben ist. Die Größe der Veränderung hängt von verschiedenen Parametern ab, die durch einfache Versuche leicht ermittelt werden können, zum Beispiel vom Abstand zwischen der Druckluftdüse 5 und der Lippe 3, von der Winkelstellung der Druckluftdüse 5 und ihrer Form sowie auch von den Strahlparametern. Im allgemeinen hat es sich als ausreichend erwiesen, wenn der Druckluftstrahl 4 mit einem Überdruck von 1 bis 2 bar aus der Druckluftdüse 5 austritt, die einen Abstand von einigen Millimetern bis zu wenigen Zentimetern von der Lippe 3 haben sollte.

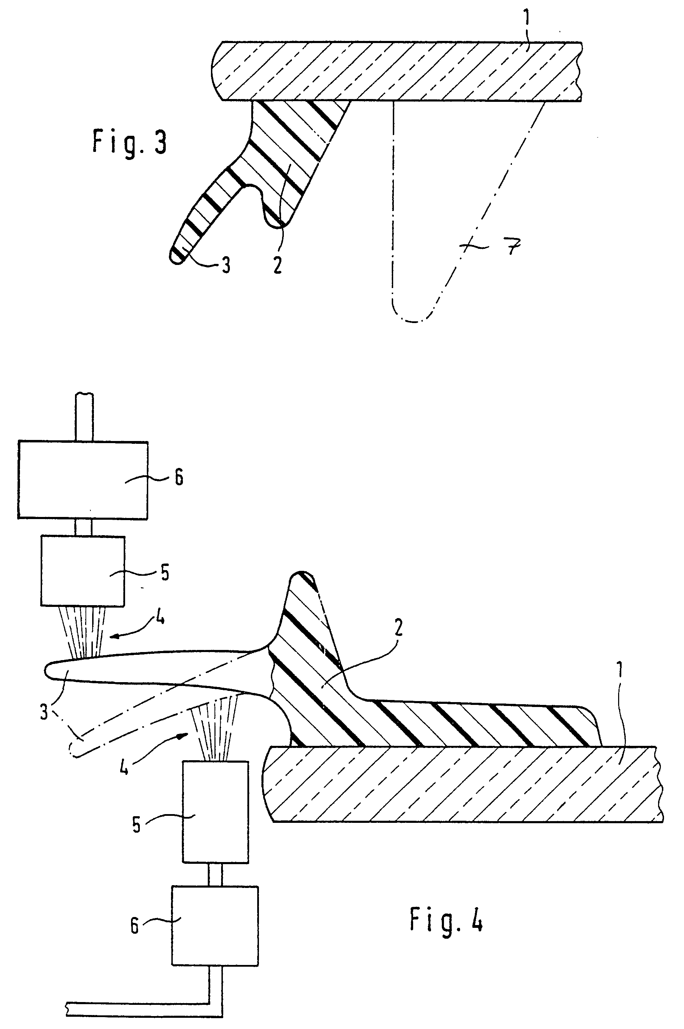

Bei der in den Figuren 2 und 3 wiedergegebenen Ausführung bezeichnen gleiche Bezugszeichen gleiche Teile. Bei dieser Ausführung ist neben dem Kunststoffprofil 2 scheibeninnenseitig ein mit strichpunktierten Linien dargestellter Klebstoffstrang 7 angedeutet, der zur Befestigung der Scheibe 1 in der Kfz-Karosserie dient. Der Druckluftstrahl 4 wird auf die Unterseite der Lippe 3 gerichtet, so daß die Lippe 3 aus ihrer ursprünglichen Lage parallel zur Ebene der Scheibe 1 in eine abgewinkelte Stellung gebogen wird. Der Endzustand ist in Figur 3 wiedergegeben.

Auch in Figur 4 bezeichnen gleiche Bezugszeichen gleiche Teile. Bei dieser Ausführung wird auf jede Seite der Lippe 3 ein Druckluftstrahl 4 gerichtet, wobei die Blasrichtungen der Druckluftdüsen 5 im wesentlichen einander entgegengesetzt sind und die Druckluftdüsen 5 versetzt angeordnet sind. Je nach Anordnung, Richtung und anderen Parametern der Druckluftstrahlen 4 können damit insbesondere bei längeren Lippen 3 besondere Querschnittsformen wie Krümmungen oder Wellen erzeugt werden.

## Patentansprüche

1. Verfahren zum Aufbringen eines strangförmigen Kunststoffprofils längs des Randes einer (Kfz-) Glasscheibe, bei dem der Querschnitt des Kunststoffprofils nach dessen Aufbringen zumindest abschnittsweise bleibend verformt wird, **dadurch gekennzeichnet , daß** die Verformung mit Hilfe eines gasförmigen oder flüssigen Mediums erfolgt, bevor das Kunststoffmaterial vollständig ausgehärtet ist.

2. Verfahren nach Anspruch 1, **dadurch gekennzeichnet**, daß ein erwärmtes oder gekühltes Medium verwendet wird.

3. Verfahren nach einem der vorangehenden Ansprüche, **dadurch gekennzeichnet**, daß ein Medium mit einer die Aushärtung des Kunststoffmaterials beschleunigenden oder verlangsamenden Beimischung verwendet wird.

4. Verfahren nach einem der vorangehenden Ansprüche , **dadurch gekennzeichnet**, daß die Verformung mit Hilfe eines strömenden Mediums erfolgt.

5. Verfahren nach einem der vorangehenden Ansprüche, **dadurch gekennzeichnet**, daß das Medium als mindestens ein Strahl auf das Kunststoffprofil gerichtet wird.

6. Verfahren nach Anspruch 5, **dadurch gekennzeichnet**, daß mit einem Druckgasstrahl gearbeitet wird.

7. Verfahren nach Anspruch 6, **dadurch gekennzeichnet**, daß der Druckgasstrahl aus einem als Druckgasdüse gestalteten und mit mind. 1 bar Überdruck beaufschlagten Werkzeug austritt.

8. Verfahren nach Anspruch 7, **dadurch gekennzeichnet**, daß die Druckgasdüse einen Düsenkopf mit mehreren Austrittsöffnungen aufweist.

9. Verfahren nach Anspruch 7 oder 8, **dadurch gekennzeichnet**, daß die Druckgasdüse einen Düsenkopf mit einer der Endform des Kunststoffprofils angepaßten Form aufweist.

10. Verfahren nach einem der vorangehenden Ansprüche, **dadurch gekennzeichnet**, daß der Querschnitt des Kunststoffprofils mittels eines parallel zur Längserstreckung des Kunststoffprofils bewegten Werkzeugs verformt wird.

11. Verfahren nach Anspruch 10, wobei das Kunststoffprofil durch Extrusion aus einer längs des Randes bewegten Extrusionsdüse mit einer profilierten Düsenöffnung hergestellt wird, **dadurch gekennzeichnet**, daß das Werkzeug der Extrusionsdüse nachgeführt wird.

12. Verfahren nach einem der Ansprüche 1 bis 9, **dadurch gekennzeichnet**, daß der Querschnitt des Kunststoffprofils abschnittsweise durch ein mit seiner Längserstreckung parallel zu dem zu verformenden Bereich angeordnetes langgestrecktes Werkzeug verformt wird.

13. Anwendung des Verfahrens nach einem der vorangehenden Ansprüche bei Kunststoffprofilen, die mindestens eine freitragende Lippe aufweisen, wobei die nachträgliche Verformung eine Veränderung der Ausrichtung der Lippe umfaßt.

14. Anwendung nach Anspruch 13, wobei zumindest ein Strahl des Mediums unter einem Winkel ungleich 90° auf die Lippe gerichtet wird.

15. Anwendung nach einem der Ansprüche 13 oder 14, **dadurch gekennzeichnet**, daß auf jede Seite der Lippe zumindest ein Strahl des Mediums gerichtet wird, wobei die Strahlen mit im wesentlichen entgegengesetzter Richtung angeordnet sind.

## Claims

1. Process for applying a cord-like plastics profile along the edge of a glass pane, in particular of a motor vehicle glass pane, in which the cross-section of the plastics profile is permanently deformed at least in sections after application, **characterized in that** the deformation occurs with the assistance of a gaseous or liquid medium before the plastics material has completely hardened.

2. Process according to claim 1, **characterized by** the use of a heated or cooled medium.

3. Process according to one of the foregoing claims, **characterized by** the use of a medium with an additive which accelerates or decelerates hardening of the plastics material.

4. Process according to one of the foregoing claims, **characterized in that** the deformation occurs with the assistance of a flowing medium.

5. Process according to one of the foregoing claims, **characterized in that** the medium is directed at the plastics profile as at least one jet.

6. Process according to claim 5, **characterized in that** a jet of compressed gas is used.

7. Process according to claim 6, **characterized in that** the jet of compressed gas emerges from a tool in the form of a compressed gas nozzle to which an overpressure of at least 1 bar is applied.

8. Process according to claim 7, **characterized in that** the compressed gas nozzle comprises a nozzle head with multiple exit openings.

9. Process according to claim 7 or 8, **characterized in that** the compressed gas nozzle comprises a nozzle head having a shape which is adapted to the final shape of the plastics profile.

10. Process according to one of the foregoing claims, **characterized in that** the cross-section of the plastics profile is deformed by means of a tool moved parallel to the longitudinal extension of the plastics profile.

11. Process according to claim 10, wherein the plastics profile is manufactured by extrusion from an extrusion nozzle which is moved along the edge and has a profiled nozzle opening, **characterized in that** the tool follows the extrusion nozzle.

12. Process according to one of claims 1 to 9, **characterized in that** the cross-section of the plastics profile is deformed in sections by means of an elongated tool which is arranged with its longitudinal extension parallel to the region to be deformed.

13. Use of the process according to one of the foregoing claims for plastics profiles comprising at least one self-supporting lip, wherein the subsequent deformation includes a modification of the lip orientation.

14. Use according to claim 13, wherein at least one jet of the medium is directed at the lip at an angle other than 90°.

15. Use according to one of claims 13 or 14, **characterized in that** at least one jet of the medium is directed at each side of the lip, whereby the jets are arranged in essentially opposed directions.

## Revendications

1. Procédé pour appliquer un profilé en matière plastique en forme de boudin le long du bord d'une vitre (de véhicule), selon lequel après application du profilé en matière plastique, au moins certains segments de sa section transversale sont déformés de façon permanente, **caractérisé en ce que** la déformation s'effectue au moyen d'un produit gazeux ou liquide avant que la matière plastique n'ait complètement durci.

2. Procédé selon la revendication 1, **caractérisé en ce qu'**on utilise un produit chauffé ou refroidi.

3. Procédé selon l'une des revendications précédentes, **caractérisé en ce qu'**on utilise un produit contenant un additif accélérant ou ralentissant le durcissement de la matière plastique.

4. Procédé selon l'une des revendications précédentes, **caractérisé en ce que** la déformation s'effectue au moyen d'un produit coulant.

5. Procédé selon l'une des revendications précédentes, **caractérisé en ce que** le produit est dirigé sur le profilé en matière plastique sous la forme d'au moins un jet.

6. Procédé selon la revendication 5, **caractérisé en ce que** l'on utilise un jet de gaz sous pression.

7. Procédé selon la revendication 6, **caractérisé en ce que** le jet de gaz sous pression sort d'un outil réalisé sous forme de buse pour gaz comprimé et soumis à une pression de 1 bar au minimum.

8. Procédé selon la revendication 7, **caractérisé en ce que** la buse pour gaz comprimé présente une tête à plusieurs orifices de sortie.

9. Procédé selon la revendication 7 ou 8, **caractérisé en ce que** la buse pour gaz comprimé présente une tête dont la forme est adaptée à la forme finale du profilé en matière plastique.

10. Procédé selon l'une des revendications précédentes, **caractérisé en ce que** la section transversale du profilé en matière plastique est déformée au moyen d'un outil déplacé parallèlement à l'étendue longitudinale du profilé en matière plastique.

11. Procédé selon la revendication 10, sachant que le profilé en matière plastique est fabriqué par extrusion à l'aide d'une filière d'extrusion présentant une ouverture profilée, qui est déplacée le long du bord, **caractérisé en ce que** l'outil suit la filière d'extrusion.

12. Procédé selon l'une des revendications 1 à 9, **caractérisé en ce que** la section transversale du profilé en matière plastique est déformée par segments par un outil allongé dont l'étendue longitudinale est orientée parallèlement à la zone à déformer.

13. Mise en oeuvre du procédé selon l'une des revendications précédentes sur des profilés en matière plastique présentant au moins une lèvre en porte-à-faux, sachant que la déformation ultérieure comprend une modification de l'orientation de la lèvre.

14. Mise en oeuvre selon la revendication 13, au moins un jet de produit étant dirigé sur la lèvre avec un angle non égal à 90°.

15. Mise en oeuvre selon l'une des revendications 13 ou 14, **caractérisé en ce qu'**au moins un jet de produit est dirigé sur chaque côté de la lèvre, les jets étant orientés dans des sens essentiellement opposés.
